# EUROPEAN PATENT APPLICATION

(11) **EP 1 577 886 A2**
(43) Date of publication of application: **21.09.2005**
(21) Application number: 05005735.5
(22) Date of filing: 16.03.2005
(51) Int. Cl.: G11B 7/085

(54) **Disk device having impact absorbing structure for optical pickup unit**

(30) Priority: 19.03.2004 JP 2004080228
(71) Applicant: ORION ELECTRIC CO., Ltd., Fukui 915-8555 (JP)
(72) Inventor: Hara, Hirotoshi, Takefu-shi Fukui, 915-8555 (JP); Kobayashi, Yuichi, Takefu-shi Fukui, 915-8555 (JP)
(74) Representative: Vossius & Partner

(57) **Abstract**

To cope with accidental impact inflicted upon an optical pickup unit (5) when the unit moves beyond a prescribed range, resin support members (9a, 9b, 10a, 10b) integrally formed with the chassis (2) of a traverse unit (1) and supporting the ends of main and sub guide rails (3 and 4) at a prescribed distance are provided on the chassis, so that the impact caused by the collision against the support members for the guide rails is absorbed. Buffer members (11a, 12a) integrally formed with the support members adjacent to the center and upright perpendicularly to the chassis are provided at least between the support members (11a, 12a) for the main guide rail (3), so that the impact upon the optical pickup unit is absorbed.

## Description

The present invention relates to a disk device for such a disk as a mini disk, a magneto-optical disk, or a compact disk, more particularly, to a disk device having an impact absorbing structure for an optical pickup unit mounted at a traverse unit.

A traverse unit including a turntable for mounting a disk is provided with an optical pickup. The optical pickup moves along guide rails at a prescribed speed during the rotation of the disk and directs a beam upon the disk to allow recorded information on the disk to be read. The beam from the optical pickup must correctly be directed upon the disk surface in order to read the reflected light accurately.

The disk is mounted on the turntable and rotated at high speed, and the optical pickup moves while tracking control is carried out so that the beam used for reading information follows the information track on the disk, and focus control is carried out so that a beam spot is accurately formed on the information track. In this way, information is surely recorded/reproduced. As described above, the optical pickup is the heart of the disk device, and if the pickup is broken, recording/reproducing cannot be carried out correctly.

In recent years, disk devices have been reduced in size and portable MD players for a portable mini disk have come into wide use. The optical pickup moves radially as the disk rotates, and if such a portable player is dropped, the optical pickup moves beyond its prescribed movable' range and collides against the support portion for the guide rails. Consequently, the lens of the optical pickup may be broken or chipped, or errors may be generated in the positioning of the guide rails, and accurate recording/reproducing is no longer possible.

Therefore, there should be some measure to prevent excessive impact from acting upon the optical pickup when the disk device is dropped, and the following disk device is known. JP-A-2001-319436 discloses an optical disk device in which a buffer is provided at a terminal end of a feeding shaft as the main shaft on which the pickup unit moves, and a plate spring is provided at the terminal end of a guide rib as a sub shaft. In this way, the level of the impact received at the device main body when the device is dropped can be reduced by the buffer and the plate spring, and a restriction wall is provided at the base end of the plate spring in order to reduce the bending of the plate spring.

JP-A-2000-285618 discloses a "disk drive device" that includes a support member to support an optical head, a guide member to guide the support member in the radial direction of the disk, a frst buffer member provided in the guide member on the inner circumferential side of the disk to buffer the impact during collision against the support member, and a second buffer member provided at the outer circumferential side of the disk to buffer the impact during collision against the support member.

JP-A-12-339881 discloses a vibration or impact proof "optical disk device" in which a second stopper member at the side of a second guide member is provided outside the moving range of the pickup, a first stopper member provided on the side of a first guide member acts upon the pickup in normal positioning and upon receiving impact or large force, the second stopper member acts upon the pickup, so that the large force is not inflicted upon the first guide member.

However, these conventional buffer members for disk devices are attached as discrete parts to the optical pickup unit or near the support part for a chassis or a guide rail. Therefore, the buffer members must be produced as discrete parts and provided in predetermined locations, and additional time-consuming job is necessary for the purpose. Meanwhile, the attachment may be loosened in the locations and the buffering function may be reduced to a less effective level than intended.

In order to solve the above-mentioned disadvantage, it is an object of the invention to provide a disk device including integrally formed buffer members provided at support members to support guide rails without attaching a special buffer member.

A disk device according to the invention includes a main guide rail and a sub guide rail provided parallel to each other on a chassis of a traverse unit and an optical pickup unit including an optical pickup movable along the guide rails. The optical pickup unit irradiates laser light on a recording surface of a disk mounted on a turntable to turn and carries out recording/reproducing. The device further includes resin support members integrally formed with the chassis and provided on the chassis of the traverse unit for supporting both ends of the main guide rail and the sub guide rail at a prescribed distance and a buffer member integrally formed with the support member and provided adjacent to the center at least between the support members for the main guide rail and upright perpendicularly to the chassis, so that impact upon the optical pickup unit is absorbed.

It is preferable to support the ends of the main and sub guide rails on one side by fixed support members respectively, and to support the ends on the other side by movable support members having a skew adjusting screw so that the degree of parallel between the main and sub guide rails may be adjustable.

A buffer member integrally formed with the support member may be provided adjacent to the center between the support members for the sub guide rail and upright perpendicularly to the chassis, so that the capability of absorbing impact upon the optical pickup unit is improved.

Furthermore, one of the buffer member provided at the support member for the main guide rail and the buffer member provided at the support member for the sub guide rail may be shifted from the other in the position so that the timing of the optical pickup unit to strike against the former buffer member is delayed and a larger impact can be smoothly absorbed by this arrangement.

In the disk device according to the invention as described above, if the optical pickup unit moves beyond the range, no large impact acts upon the optical pickup unit as the unit strikes against the buffer members at the support members. Therefore, a lens used as a part of the optical pickup is unlikely to be broken or chipped, or no error is generated in the positioning of the guide rails, and therefore accurate reproducing /recording is not prevented.

According to the invention, the buffer members are integrally formed with the support members for the guide rails, and therefore additional time-consuming job is not necessary for producing the buffer members as discrete parts or attaching them. In other words, simply by attaching the main and sub guide rails to the support members having the buffer members integrally, it is possible to protect the optical pickup unit moving beyond the range against impact. In addition, when the buffer members are provided in different positions between the main and sub guide rails, the optical pickup unit strikes against the other buffer member on the main or sub guide rail side after striking against one buffer member on the main or sub guide rail side and greatly deforming the buffer member. Therefore, large impact can be absorbed.
Fig. 1 is a plan view of a traverse unit in a disk device according to an embodiment of the invention;
Fig. 2 is a right side view of the traverse unit;
Fig. 3 is a right side view of the chassis of the traverse unit;
Fig. 4 is a plan view of a buffer member attached to a fixed support member for a guide rail in the device;
Fig. 5 is a sectional view taken along line 5 - 5 in Fig. 4; and
Fig. 6 is a plan view showing the positional relation between the buffer members and the optical pickup unit when they collide against each other.

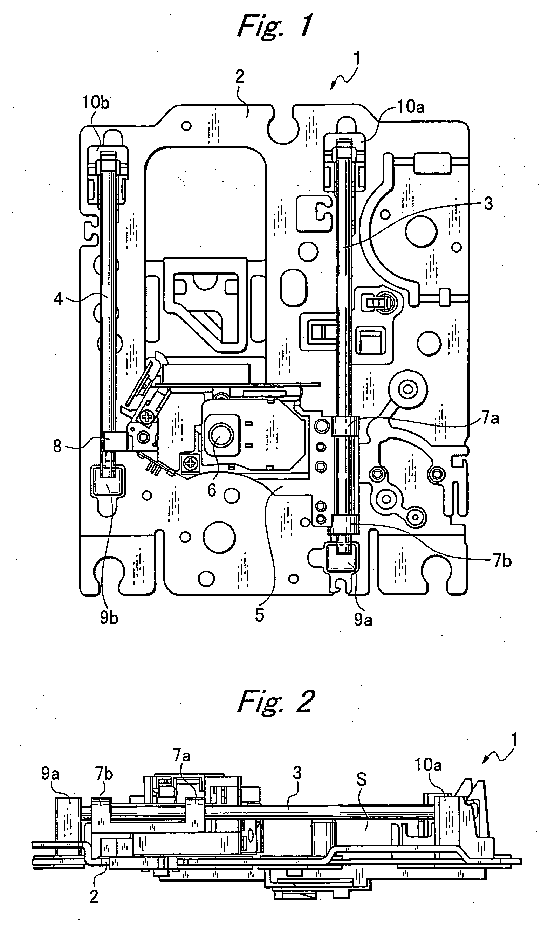

Fig. 1 shows a traverse unit 1 in a disk device according to an embodiment of the invention. The unit includes a metal chassis 2, a main guide rail 3 and a sub guide rail 4 attached parallel to each other on the chassis 2, and an optical pickup unit 5 including an optical pickup 6. Guide pieces 7a and 7b slidably fitted to the main guide rail 3 are provided on one end side of the optical pickup unit 5, a guide piece 8 that slidably holding the sub guide rail 4 is provided on the other end side. The optical pickup 6 can move along the main guide rail 3 and the sub guide rail 4 as these guide pieces 7a, 7b, and 8 serve as guides.

The optical pickup unit 5 is provided with a rack engaged with a gear (not shown) and moves as the gear rotates with being driven by a motor. The chassis 2 is provided with a turntable (not shown) to be rotated by a spindle motor, and the optical pickup 6 moves along the main guide rail 3 and the sub guide rail 4 in the radial direction of the disk mounted to the turntable.

The main guide rail 3 and the sub guide rail 4 have their ends on one side supported by fixed support members 9a and 9b made of synthetic resin and their ends on the other side supported by movable support members 10a and 10b. The fixed support members 9a and 9b have support holes into which the ends on one side of the main guide rail 3 and the sub guide rail 4 are fitted and fixed. The ends on the other side of the main guide rail 3 and the sub guide rail 4 are supported by the movable support members 10a and 10b in which the ends can be moved for adjustment in the vertical direction so that the rails are parallel to the disk mounted on the turntable to rotate. In this way, the optical pickup 6 can move along the main guide rail 3 and the sub guide rail 4 with keeping a prescribed gap.

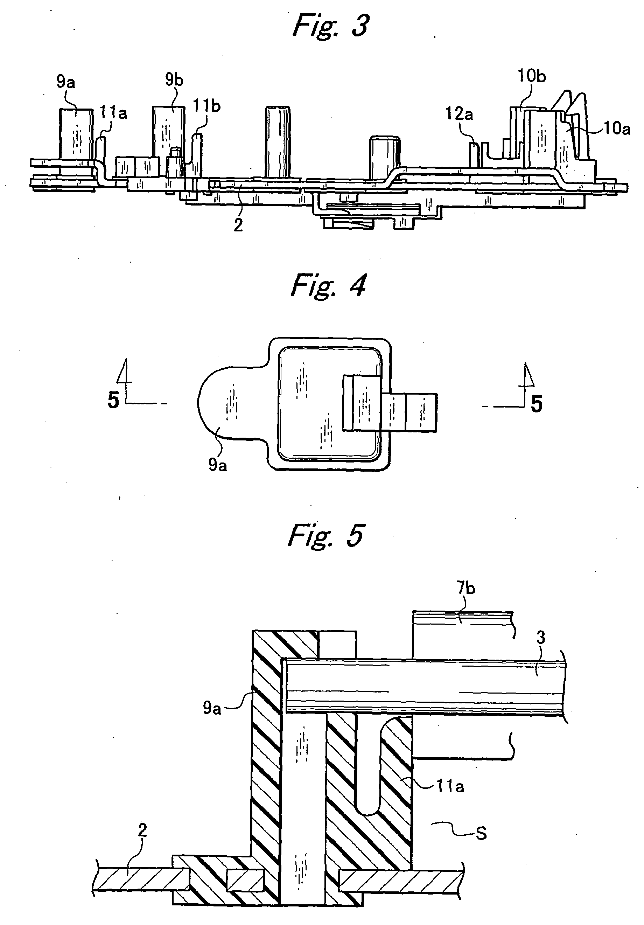

As shown in Fig. 2, the fixed support members 9a, 9b and the movable support members 10a, 10b are provided upright on the metal chassis 2. The fixed support members 9a, 9b and the movable support members 10a, 10b can be formed integrally with the chassis 2 by setting the chassis 2 in a mold and carrying out resin injection molding (see Fig. 5).

The fixed support members 9a and 9b are provided with integrally formed buffer members 11a and 11b standing upright on the inner side with a prescribed distance. Similarly, the movable support member 10a has an integrally formed buffer member 12a. The buffer members 11a and 11b are close and parallel to the fixed support members 9a and 9b and standing upright perpendicularly to the chassis 2. The buffer member 12a is also parallel to the movable support member 10a and standing upright perpendicularly to the chassis 2. These buffer members 11a, 11b, and 12a are provided near the ends of the main and sub guide rails 3 and 4 in a gap S from the chassis 2. The movable support member 10b may have an integrally formed buffer member as one (12a) in the movable support member 10a.

These buffer members 11a, 11b, and 12a are elongate and bend when the optical pickup unit 5 strikes against their side part. As shown in Fig. 5, when the optical pickup unit 5 collides against the buffer member 11a of the fixed support member 9a, the guide piece 7b moving along the main guide rail 3 collides against the buffer member 11a. At the time, the buffer member 11a bends to absorb the impact, so that the impact is not inflicted on the optical pickup unit 5.

Similarly, the impact is alleviated upon colliding against the buffer member 11b provided at the fixed support member 9b supporting one end of the sub guide rail 4. In addition, the buffer member 12a is provided at the movable support member 10a and also alleviates the impact upon the collision of the optical pickup unit 5.

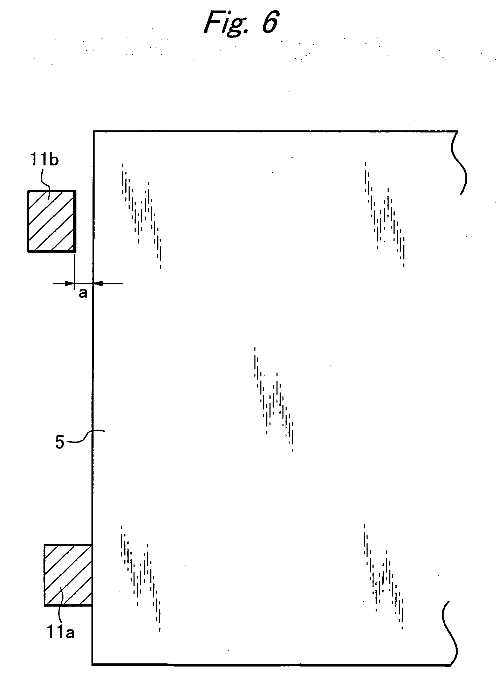

As shown in Fig. 6, the buffer members 11a and 11b provided at the fixed support members 9a and 9b supporting the main and sub guide rails 3 and 4 are in shifted positions so that their colliding timings are slightly different. In this positional relation, with small impact, the optical pickup unit 5 moves to cause the guide piece 7b on the main guide rail 3 to collide against the buffer member 11a, and the buffer member 11a bends to alleviate the impact while the guide piece 8 on the sub guide rail 4 does not strike against the buffer member 11b, so that the optical pickup unit 5 stops short of colliding by a small distance "a".

Conversely, with large impact, the guide piece 7b on the main guide rail 3 collides against the buffer member 11a, the buffer member 11a bends, and then the guide piece 8 on the sub guide rail 4 strikes against the buffer member 11b. Once the buffer member 11b bends, the optical pickup unit 5 stops moving. In this way, the timing of the optical pickup 5 to strike against the buffer member 11b is delayed, so that the impact can be absorbed gradually and alleviated smoothly and large kinetic energy can be absorbed.

Note that instead of having the buffer members 11a and 11b and the guide pieces 7b and 8 shifted in the positions, the guide pieces 7b and 8 may be allowed to simultaneously strike against the buffer members 11a and 11b, respectively, and the bending strength of the buffer member 11b may be set larger than (for example twice as large as) the buffer piece 11a. In this way, substantially the same buffering effect can be provided. It is understood that the guide pieces 7b and 8 may simultaneously strike against the buffer members 11a and 11b, respectively, and the buffer member 11a and 11b may be more flexible to absorb large impact. The buffer member 12a provided at the movable support member 10a is formed in the same manner.
As shown in Fig. 4, the fixed support members 9a and 9b supporting the main and sub guide rails 3 and 4 fixedly support the ends of the main and sub guide rails 3 and 4 on one side at the support holes. While, the movable support members 10a and 10b support the one side of the guide rails adjustably their heights. More specifically, skew adjusting screws are screwed in from the bottom of the movable support members 10a and 10b through the chassis 2, and the main and sub guide rails 3 and 4 are supported while they can be adjusted by the tip ends of the skew adjusting screws. A coil spring is provided to apply energizing force to keep the main and sub guide rails 3 and 4 in abutment against the tip ends of the skew adjusting screws. Guide grooves having their upper sides open are provided at the upper ends of the movable support members 10a and 10b, so that the main and sub guide rails 3 and 4 are fitted into the grooves.

If strong impact is inflicted upon the disk device described above as the device is dropped for example, and the optical pickup unit 5 moves beyond the disk radius and collides against the fixed support members 9a and 9b or the movable support members 10a and 10b, the impact is absorbed by the buffer members 11a and 11b. Therefore, not only the optical pickup unit 5 but also the fixed support members 9a and 9b and the movable support members 10a and 10b are unaffected by the impact.

## Claims

1. A disk device comprising a main guide rail (3) and a sub guide rail (4) provided parallel to each other on a chassis (2) of a traverse unit (1), and an optical pickup unit (5) including an optical pickup (6) movable along the guide rails, said optical pickup unit irradiating laser light on a recording surface of a disk mounted on a turntable to turn, thereby carrying out recording/reproducing, **characterized in that**:
said device further comprising resin support members (9a, 9b, 10a, 10b) provided on the chassis (2) of the traverse unit (1) for supporting both ends of the main guide rail (3) and the sub guide rail (4) at a prescribed distance, said support members being integrally formed with the chassis (2), and buffer members (11a, 12a) integrally formed with the support members (9a, 10a) respectively and provided adjacent to the center at least between the support members (9a, 10a) for the main guide rail (3) and upright perpendicularly to the chassis (2), so that impact upon the optical pickup unit is absorbed.

2. The disk device according to claim 1, wherein the ends of the main and sub guide rails (3 and 4) on one side are supported by fixed support members (9a, 9b) respectively, and the ends on the other side are supported by movable support members (10a, 10b) having a skew adjusting screw.

3. The disk device according to claim 1 or 2, further comprising at least a buffer member (11b) integrally formed with the support member (9b and/or 10b) provided adjacent to the center between the support members for the sub guide rail (4) and upright perpendicularly to the chassis (2).

4. The disk device according to claim 3, wherein one of the buffer member (11a) provided at the support member (9a) for the main guide rail (3) and the buffer member (11b) provided at the support member (9b) for the sub guide rail (4) is shifted from the other in the position so that the timing of the optical pickup unit (5) to strike against said one buffer member (11a or 11b) is slightly delayed.
